# EUROPEAN PATENT APPLICATION

(11) **EP 1 486 874 A1**
(43) Date of publication of application: **15.12.2004**
(21) Application number: 03703297.6
(22) Date of filing: 10.02.2003
(51) Int. Cl.: G06F 12/00, G06F 13/00, G06F 17/50

(54) **DOCUMENT FILE READ SYSTEM USING NETWORK**

(30) Priority: 13.02.2002 JP 2002035458
(71) Applicant: Microarts Co., Ltd., Aizuwakamatsu-Shi, Fukushima 965-0872 (JP)
(72) Inventor: CHIBA, Nobuaki, MICROARTS CO., LTD., Aizuwakamatsu-Shi, Fukushima 965-0872 (JP); ISHIKAWA, Masatoshi, MICROARTS CO., LTD., Aizuwakamatsu-Shi, Fukushima 965-0872 (JP)
(74) Representative: Klunker . Schmitt-Nilson . Hirsch
(86) International application number: PCT/JP2003/001377
(87) International publication number: WO 2003/069481

(57) **Abstract**

In order to make it possible for anyone to easy peruse and use a document file such as CAD data shared on an Internet server, without using document creation software which has been used to create the document file, a program for converting a document file to PDF is placed on a web server. When a peruser peruses a document file, the document file is converted to the PDF in the real time, and a resultant PDF file is downloaded.

## Description

### TECHNICAL FIELD

The present invention relates to a document file perusal system using a network. In particular, the present invention relates to a document file perusal system in which anybody can easily peruse and use a document file such as CAD (Computer Aided Design) data shared on an Internet or intranet server without using a document creation software that has been used to create the document file.

### BACKGROUND ART

With the advance of the IT (Information Technology), the CAD is becoming the mainstream of drawing creation instead of the conventional handwritten drawings. As a result, digital data takes the place of drawing circulation using paper and it has become a matter of course to directly exchange CAD data between computers on the Internet or an intra-company network (intranet). Furthermore, from the viewpoint of sharing and reuse of data with the spread of networks, there is a tendency that CAD data are brought together in a file server on the network.

For perusing and reusing these shared CAD data, however, specific CAD software or CAD viewer (perusal software) is needed. Therefore, an engineer having knowledge concerning the CAD can construct a suitable environment. However, it is still very difficult for engineers other than CAD engineers, traders, clerical employees, and a large number of other ordinary persons to peruse and use CAD data.

In many fields, those who actually use drawings are not CAD engineers, but engineers or craftsmen in the forefront. Nevertheless, it is difficult for persons other than CAD engineers to peruse CAD data. Therefore, paper drawings still remain the mainstream in the actual spots. Furthermore, there are too many CAD data formats. Even if the person who wants to actually use the drawings is a CAD engineer, the CAD engineer cannot peruse and use CAD data stored using CAD data formats other than the CAD data format learned by the person, until the person prepares CAD software and viewers corresponding to respective CAD data and newly learns operation methods. At the present time when information opening to the public and electronic delivery of goods are spread, it is still difficult for most persons to peruse and reuse CAD data, although sharing CAD data on the Internet is implemented by the benefits of the IT. This is a serious problem.

As one method for solving this problem, there is a PDF technique. The PDF (Portable Document Format) is a document format developed by the Adobe Systems in U.S. The PDF has become substantially standard, and the spread ratio of the Acrobat Reader, which is a PDF file perusal program, is extremely high. The basic ides of the PDF resides in expressing a paper printing result on a computer. In the CAD as well, the result is output onto paper and it attracts attention of a large number of persons. If the PDF is used, therefore, the CAD data can be perused as the drawings with feeling resembling that of the conventional paper drawings, without requiring paper. Furthermore, the PDF is developed on the basis of PostScript. The PDF is good at figure display besides composition expression. Therefore, the PDF has a property that vector data used in the CAD can be drawn with a high quality. As a matter of course, an attempt to use this PDF in CAD data expression has been made and the PDF is actually used in CAD data expression. However, use of the PDF is difficult due to the following points.

In other words,
(1) Each data provider must previously convert CAD data to the PDF.
(2) It becomes necessary to install a conversion program in each of computers that conduct conversion processing.
(3) In most cases, the PDF data obtained by the conversion degrades in quality, and the required capacity increases as compared with the original CAD data.

In the case where the number of CAD data is large, the number amounts to several hundreds. It requires a great deal of labor to previously convert all CAD data to the PDF. Furthermore, if certain CAD data is updated, then it is necessary to recreate the PDF data each time. Therefore, a great deal of labor is required for management as well.

The present invention has been achieved in order to solve the above-described problems for both the peruser and provider of CAD data. It is an object of the present invention to provide a document file perusal system that makes it possible for a person having no knowledge concerning the CAD to peruse CAD data easily and practically without requiring a CAD program or a CAD viewer for the peruser of the CAD data and without requiring a conversion program or conversion work for the provider of the CAD data.

### DISCLOSURE OF THE INVENTION

The present invention relates to a document file perusal system using network. The object of the present invention is achieved by a document file perusal system using network, the document file perusal system including a web server and a plurality of file peruser terminals which can conduct mutual communication via a network, wherein the web server includes a web server program, a conversion program and a data file storage apparatus; a plurality of document files differing in format are stored in the data file storage apparatus; each of the file peruser terminals includes a web browser program and a dedicated file perusal program; if from a file peruser terminal a file peruser orders the web server program in the web server to select some document file stored in the data file storage apparatus and convert the document file to a format corresponding to the dedicated file perusal program, then the web server program orders the conversion program to conduct conversion, and the conversion program converts the selected document file in the data file storage apparatus to the format corresponding to the dedicated file perusal program; and the converted document file is sent from the web server program to the web browser program, and the web browser program starts the dedicated file perusal program in order to make it possible for the file peruser to peruse the converted document file.

The object of the present invention is achieved more efficiently by the document file perusal system using network, wherein each of document files stored in the data file storage apparatus includes a document file data main body, or information of a link to a second web server which is different from the web server and in which document file data is actually present; and if the document file selected by the file peruser is the link information, then the document file data is downloaded from the second web server, and the conversion program in the web server converts the downloaded document file data to the format corresponding to the dedicated file perusal program.

The object of the present invention is achieved more efficiently by the document file perusal system using network, wherein the conversion program is formed so that the file peruser may set a form of the conversion when selecting some document file stored in the data file storage apparatus and ordering conversion to the format corresponding to the dedicated file perusal program.

### BRIEF DESCRIPTION OF THE DRAWINGS

FIG. 1 is a concept diagram showing a general configuration of a file perusal system according to the present invention;
FIG. 2 is a detailed configuration diagram of a data file storage apparatus;
FIG. 3 is a detailed configuration diagram of a conversion program;
FIG. 4 is a diagram showing an outline of a mechanism of file perusal in a file perusal system according to the present invention;
FIG. 5 is a flow chart showing a CAD data file list page creation logic;
FIG. 6 is a flow chart showing a details setting page creation logic;
FIG. 7 is a flow chart showing a PDF file creation logic;
FIG. 8 is a flow chart showing a CAD data downloading logic;
FIG. 9 is a flow chart showing a logic for converting CAD data to CAD data in another format and downloading resultant CAD data;
FIG. 10 is a diagram showing a logic used when conducting linking to a second web server;
FIG. 11 is a flow chart showing a flow at the time of linking;
FIG. 12 is a flow chart showing a flow at the time of perusal of CAD data from a user's terminal;
FIG. 13 shows an example of a top page view (login view);
FIG. 14 shows an example of a view representing a highest directory class in a CAD data file list page;
FIG. 15 shows an example of a view representing a class subsequent to the directory class shown in FIG. 14;
FIG. 16 shows an example of a view representing a class subsequent to the directory class shown in FIG. 15;
FIG. 17 shows an example of a view displayed when CAD data is converted to the PDF and perused; and
FIG. 18 shows an example of a PDF file perusal details setting order view.

### BEST MODE FOR CARRYING OUT THE INVENTION

Hereafter, a document file perusal system according to the present invention will be described in detail with reference to the drawings.

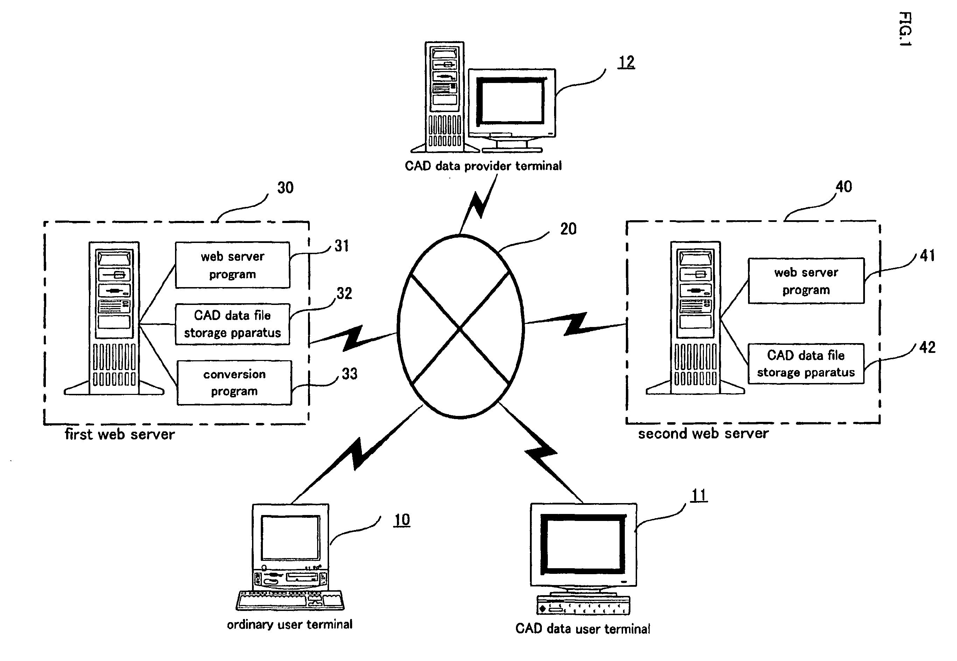

FIG. 1 is a concept diagram showing a general configuration of a document file perusal system according to the present invention.

In FIG. 1, an ordinary user terminal 10, a CAD data user terminal 11, a CAD data provider terminal 12, a first web server 30 and a second web server 40 are connected to each other via a network 20 (Internet or an intranet).

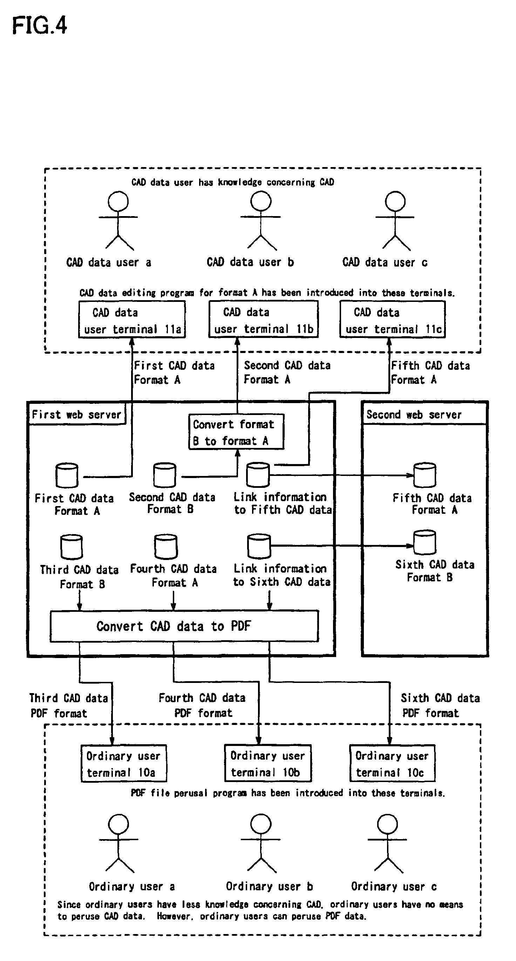

The ordinary user terminal 10 is a terminal of a person who does not conduct creation and editing of CAD data, but who wants to peruse the CAD data as drawings (hereafter referred to as "ordinary user"). As shown in FIG. 4, the ordinary user terminal 10 has a web browser program and a PDF file perusal program, which is one of dedicated file perusal programs, installed therein.

The CAD data user terminal 11 is a terminal of a person who is in a position to directly handle CAD data and who can create and edit CAD data (hereafter referred to as "CAD data user"). The CAD data user terminal 11 has CAD software having a specific form, a web browser program and a PDF file perusal program installed therein.

By the way, a file peruser indicates at least the ordinary user or CAD data user.

The CAD data provider terminal 12 is a terminal of a person (hereafter referred to as "CAD data provider") who inputs /outputs CAD data to /from a file sharing space ( for example, a data file storage apparatus described later) on a web server. The CAD data provider terminal 12 has a web browser program and CAD data to be provided, stored therein. The CAD data provider conducts transfer and deletion of CAD data with respect to the web server, by using the HTTP (Hyper Text Transfer Protocol), FTP (File Transfer Protocol), or a different transfer protocol from a web browser program in the CAD data provider terminal 12.

The first web server 30 is a computer that forms a nucleus of a file perusal system according to the present invention. In response to a request issued by each terminal, the first web server 30 converts CAD data existing on the first web server to a predetermined format, or functions to transmit the CAD data to each terminal without changing the format. The first web server 30 includes a web server program 31, a data file storage apparatus 32, and a conversion program 33.

The second web server 40 is a web server of conventional type. In response to a request issued by each terminal, the second web server 40 transmits raw CAD data (CAD data that is not subjected to a different format) directly to the terminal or temporarily transmits the raw CAD data to the first web server 30, converts the raw CAD data to a different format, and then transmits resultant CAD data to the terminal.

Each of the web servers (30 or 40) includes a web server program (31 or 41) and a data file storage apparatus (32 or 42). The web server program analyzes the URL (Uniform Resource Locator) sent from the web browser. If a result of the URL analysis indicates an HTML display request, then the web server program transmits pertinent HTML information to the web browser program. If a result of the URL analysis indicates execution of a conversion program, then the web server program starts the conversion program, delivers information added to the URL to the conversion program, and transmits a web page HTML and so on created by the conversion program to the web browser program. As the web server program, the Apache, which is free software, or the Internet Information Server (IIS) by Microsoft Corporation in U.S. is frequently used.

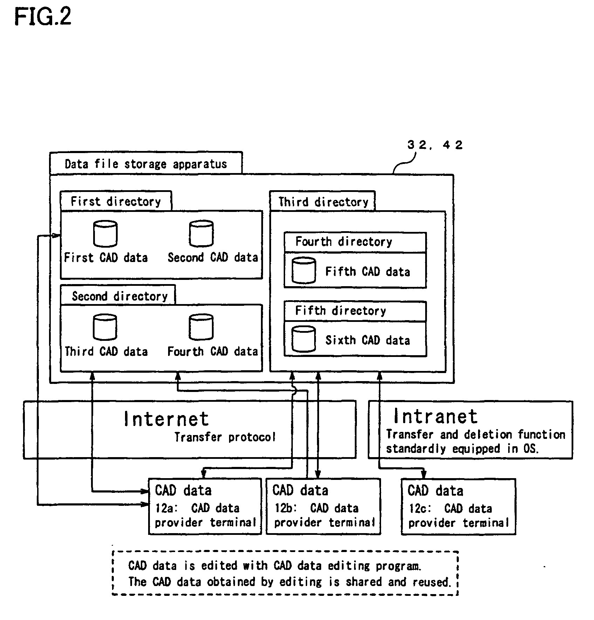

Each of the file storage apparatuses (32,42) functions to store CAD data to be provided, in the original format. As shown in FIG. 2, each of the file storage apparatuses (32,42) includes a plurality of places for storing CAD data, called directories. Child directories can also be provided in each directory. In FIG. 2, fourth and fifth directories are child directories of a third directory. CAD data are arranged and stored in these directories. The file storage function is a standard function provided in the OS (Operating System). By the way, it is not always necessary that the data file storage apparatus is present in the first or second web server, but the data file storage apparatus may be present as an independent server (data file server) connected to the same network.

CAD data is edited and created by a CAD data editing program. Since the CAD data editing program is incorporated in the CAD data provider terminal 12, the CAD data can be created and edited.

The CAD data can also be stored in the CAD data provider terminal 12. If the CAD data is stored in the data file storage apparatus 32 in the web server, however, a plurality of terminals can use the CAD data in common, resulting in efficiency. For transferring CAD data from the CAD data provider terminal 12 to the data file storage apparatus 32 by using the Internet, a transfer protocol (HTTP or FTP) is used.

In addition, the first web server has the conversion program 33 stored therein. The conversion program 33 operates in cooperation with the web server program 31 to conduct file format conversion.

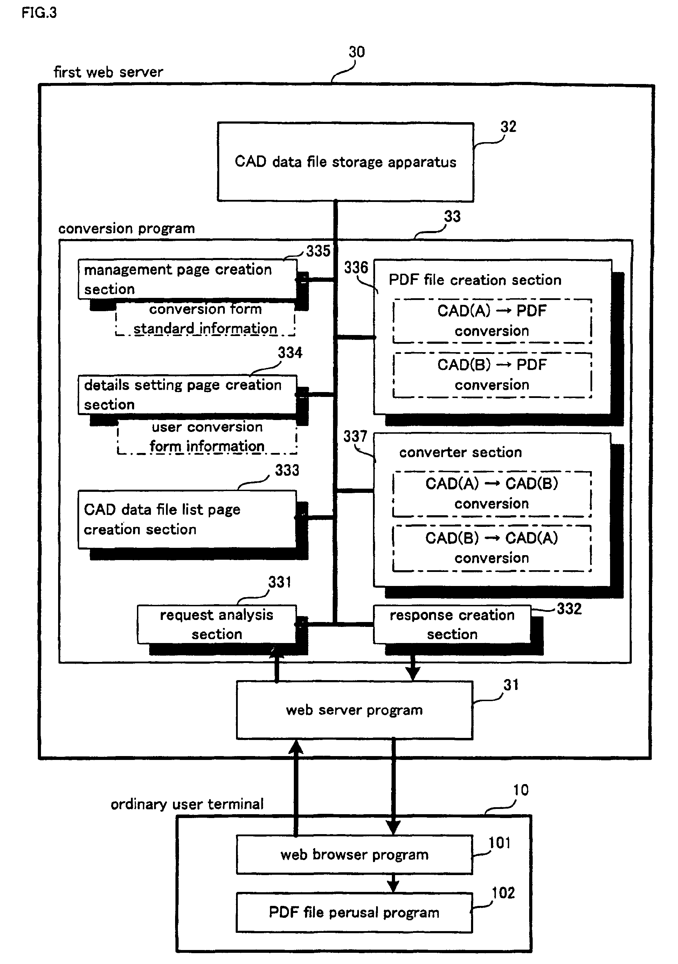

FIG. 3 is a detailed configuration diagram of the conversion program 33. Hereafter, contents of the conversion program 33 will be described in detail with reference to the drawings.

The ordinary user terminal 10 has a web browser program 101 and a PDF file perusal program 102 (Acrobat Reader) installed therein. The first web server 30 has the web server program 31 and the conversion program 33 installed and activated therein.

The web server program 31 analyzes a URL (HTTP request) sent from the web browser program 101 in the ordinary user terminal 10, and sends back an HTML page requested by the URL to the web browser program 101 of the origination source. If the URL is not an HTML page but a conversion program, a pertinent program therein is called. At this time, information added to the URL is delivered to the pertinent program. If a response is returned from the conversion program, the response from the conversion program is transmitted to the web browser program 101.

As for information transmitted to the web browser program 101 by the web server program 31, there are PDF data and CAD data besides the HTML code. In the case of the HTML code, the web browser program 101 draws the HTML code on a view in the web browser program 101 according to the HTML agreement. In the case of PDF data, the web browser program 101 calls the PDF file perusal program 102, and the called PDF file perusal program 102 downloads and displays PDF data. In the case of CAD data, the CAD data is downloaded and stored on a storage medium (not illustrated) in the terminal.

From the function aspect, the conversion program 33 can be divided into seven components: (1) a request analysis section; (2) a response creation section; (3) a CAD data file list page creation section; (4) a details setting page creation section: (5) a management page creation section; (6) a PDF file creation section; and (7) a converter section.

The request analysis section 331 analyzes a request sent from the web server program 31. If a result of the analysis is CAD data file list page creation, then the request analysis section 331 calls a CAD data file list page creation section 333, creates a list page of CAD data files stored in the data file storage apparatus 32 by using the HTML, and delivers the list page to a response creation section 332. The response creation section 332 delivers HTML information thus created and sent to the web server program 31. The web server program 31 sends the information to the ordinary user terminal 10 , and the web browser program 101 displays the information on the screen.

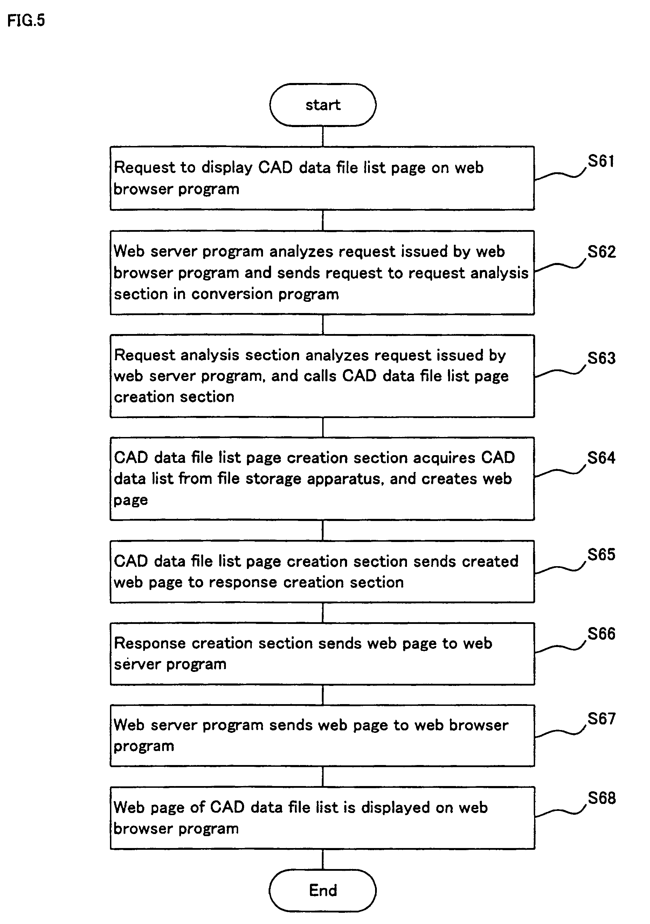

FIG. 5 is a flow chart showing the procedure heretofore described. Hereafter, the procedure will be described in detail with reference to FIG. 5.

First, a user requests that a CAD data file list page should be displayed on a web browser program in a terminal (step S61). The web server program analyzes the request issued by the web browser program. Since the request is intended for the conversion program, the web server program sends a request to the request analysis section in the conversion program 33 (step S62). The request analysis section analyzes the request issued by the web server program. Since in this case the request is the CAD data file list page creation request, the CAD data file list page creation section is called (step S63).

Subsequently, the CAD data file list page creation section acquires a list of CAD data files from the data file storage apparatus 32, and creates a web page (step S64).

In addition, the CAD data file list page creation section sends the created web page to the response creation section (step S65).

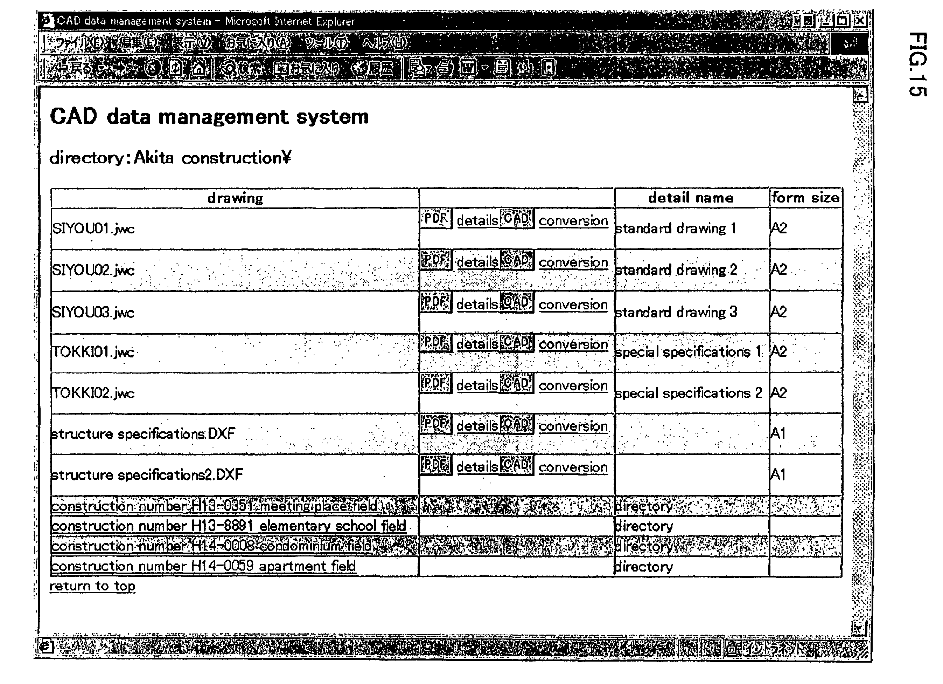

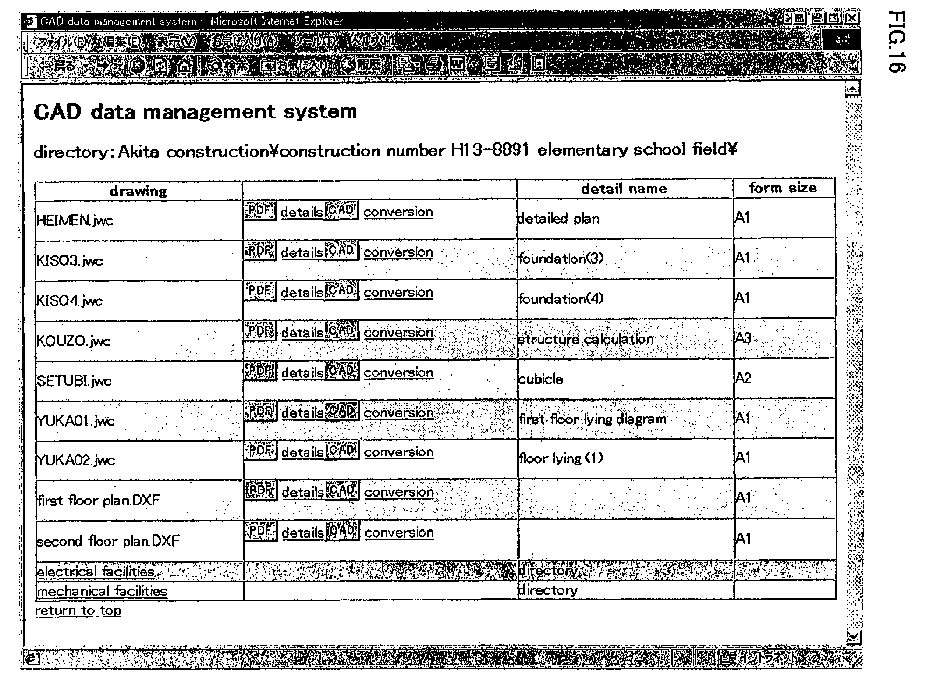

The response creation section sends the created web page to the web server program (step S66). The web server program sends the created web page to the web browser program (step S67). As a result, a web page of the CAD data file list is displayed on the web browser program (step S68). FIGS. 15 and 16 show examples of its display view.

In the same way, the request analysis section 331 analyzes contents of a request, calls corresponding creation sections (the above-described (4) to (7)), and makes the corresponding creation sections conduct respective processing operations. Hereafter, functions of respective sections will be described.

If a details setting page creation section 334 is called, then the details setting page creation section 334 creates an HTML for form setting according to the specified format of the CAD data, delivers the HTML to the response creation section 332, and the response creation section 332 sends the HTML from the web server program to the web browser program in the user terminal.

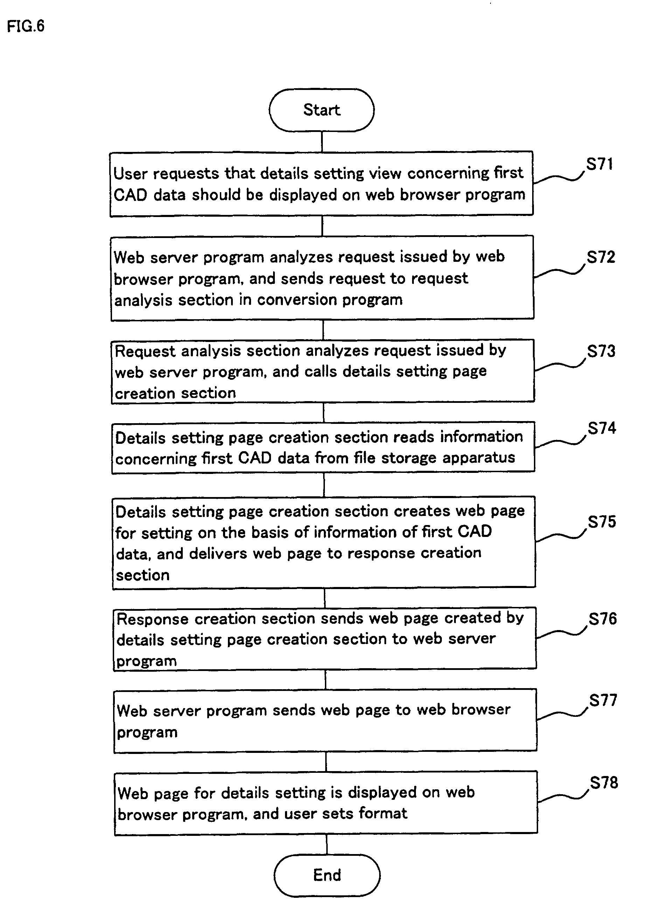

FIG. 6 shows the procedure heretofore described in a flow chart. Hereafter, the procedure will be described in detail with reference to FIG. 6.

If the user selects CAD data (for example, first CAD data) desired to be converted to the PDF or another format in the CAD data file list page, then the conversion form can be altered from the original form. In that case, however, the user requests that a details setting view concerning the first CAD data should be displayed on the web browser program (step S71). The web server program analyzes the request issued by the web browser program. Since the request is intended for the conversion program, the web server program sends a request to the request analysis section in the conversion program (step S72). Subsequently, the request analysis section analyzes the request issued by the web server program. Since the request is a details setting page creation request, the request analysis section calls the details setting page creation section (step S73).

Subsequently, the details setting page creation section reads out information concerning the first CAD data from the file data storage apparatus (step S74). The details setting page creation section creates a web page for setting on the basis of the information of the first CAD data, and delivers the web page to the response creation section (step S75). The response creation section sends the web page created by the details setting page creation section to the web server program (step S76). The web server program sends the web page to the web browser program (step S77). The web page for details setting is displayed on the web browser program, and the user sets and inputs form conditions (step S78). The altered form is temporally stored in "user conversion form information" and used at the time of subsequent data conversion.

If a management page creation section 335 is called, then the management page creation section 335 creates an HTML for setting a standard form used when details setting is not conducted in the ordinary user terminal 10, and delivers the HTML to the response creation section 332. The set form is stored in "conversion form standard information." Furthermore, the conversion form standard information is also used in the initial state in the case where the user has accessed the details setting view. Only an authorized person can use this page. In general, the CAD data provider or the web server manager conducts this. If the manager does not set this form, the conversion program creates the standard setting.

If a PDF file creation section 336 is called, then the PDF file creation section 336 converts specified CAD data to a PDF file, and delivers the PDF file to the response creation section 332. If at this time there is the above-described "user conversion form information," then conversion is conducted according to the setting. If there is not "user conversion form information," then conversion is conducted according to the "conversion form standard information."

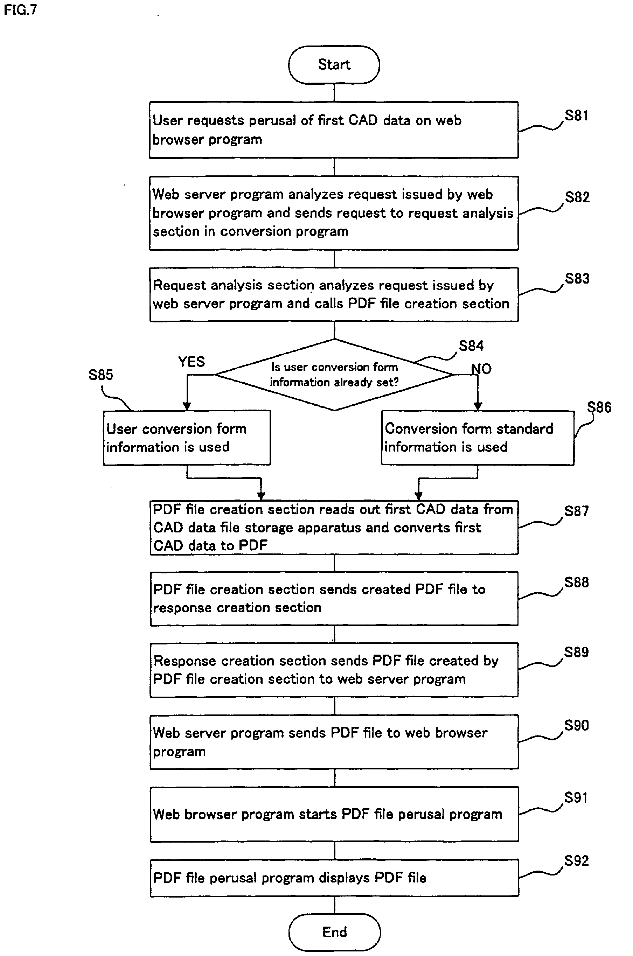

FIG. 7 is a flow chart showing the procedure heretofore described. Hereafter, the procedure will be described in detail with reference to FIG. 7.

First, the user requests perusal of the first CAD data on the web browser program in the terminal (step S81). The web server program analyzes the request issued by the web browser program. Since the request is intended for the conversion program, the web server program sends a request to the request analysis section in the conversion program (step S82). Subsequently, the request analysis section analyzes the request issued by the web server program, recognizes that the request is a PDF file creation request, and calls the PDF file creation section (step S83). If at this time the user conversion form information is set, then the user conversion form information is used to conduct conversion to the PDF at the next step (step S85). If the user conversion form information is not set, then the conversion form standard information is used to conduct conversion to the PDF at the next step (step S86). The PDF file creation section reads out the first CAD data from the file storage apparatus and converts the first CAD data to the PDF (step S87). The PDF file creation section sends the created PDF file to the response creation section (step S88). The response creation section sends the PDF file created by the PDF file creation section to the web server program (step S89). The web server program sends the PDF file to the web browser program (step S90). Since the sent data is the PDF file, the web browser program starts the PDF file perusal program (step S91), and the PDF file perusal program displays the PDF file (step S92).

As items that can be set in detail at the time of PDF conversion, there are line color, line thickness, line kind, character font, character color, background color, dot size, dot color, division into a plurality of pages, concatenation of a plurality of data, whether a line is displayed or not displayed, whether a layer is displayed or not displayed, whether a character is displayed or not displayed, contraction or expansion, rotation, margin, origin movement, conversion range specification, and additional securities such as display, printing, composition alteration, composition selection and comments.

If a converter section 337 is called, then the converter section 337 converts CAD data in a specified format to CAD data in a specified different format and then delivers resultant CAD data to the response creation section 332. If at this time there is the "user conversion form information," then conversion is conducted according to the setting. If there is not the "user conversion form information," then conversion is conducted according to the "conversion form standard information." By the way, the PDF file creation and the converter can cope with a plurality of CAD formats.

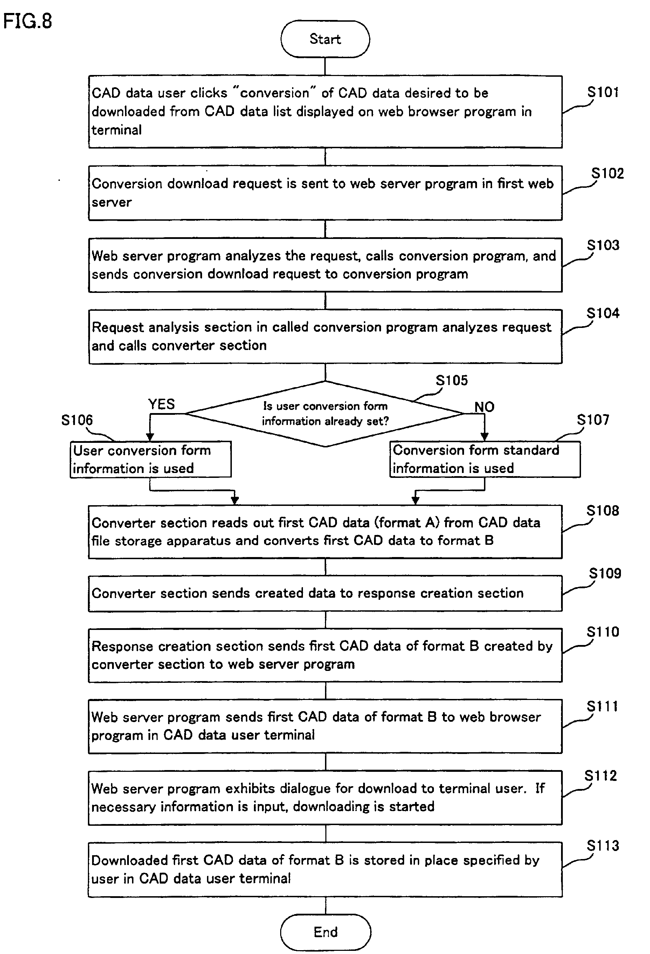

FIG. 8 is a flow chart showing the procedure heretofore described. Hereafter, the procedure will be described in detail with reference to FIG. 8.

First, the CAD data user clicks "conversion" of CAD data desired to be downloaded from the CAD data list displayed on the web browser program in the terminal 11 (step S101). Since setting for conversion is displayed on the web browser program, the user conducts necessary setting input and clicks a "download" button. As a result of this operation, a conversion download request is sent to the web server program in the first web server (step S102).

Subsequently, the web server program analyzes the above-described request. If the web server program recognizes that the request is a request for the conversion program, then the web server program calls the conversion program, and sends a conversion download request (step S103). In the conversion program called according to the request, first, the request analysis section analyzes the request. If the request analysis section recognizes that the request is a conversion download request as a result of the analysis, the request analysis section calls the converter section (step S104). If at this time the "user conversion form information" is already set, it is used (step S106). If the "user conversion form information" is not set, then the "conversion form standard information" is used (step S107).

In addition, the converter section reads out the first CAD data (format A) from the file storage apparatus, and converts the first CAD data to a format B (step S108). The converter section sends the created first CAD data to the response creation section (step S109). The response creation section sends the first CAD data of the format B created by the converter section to the web server program (step S110). The web server program sends the first CAD data of the format B to the web browser program in the terminal 11 (step S111). The web server program exhibits a dialogue for download to the user of the terminal 11. If necessary information is input, downloading is started (step 112). The downloaded first CAD data of the format B is stored in a place specified by the user in the CAD data user terminal 11 (step S113).

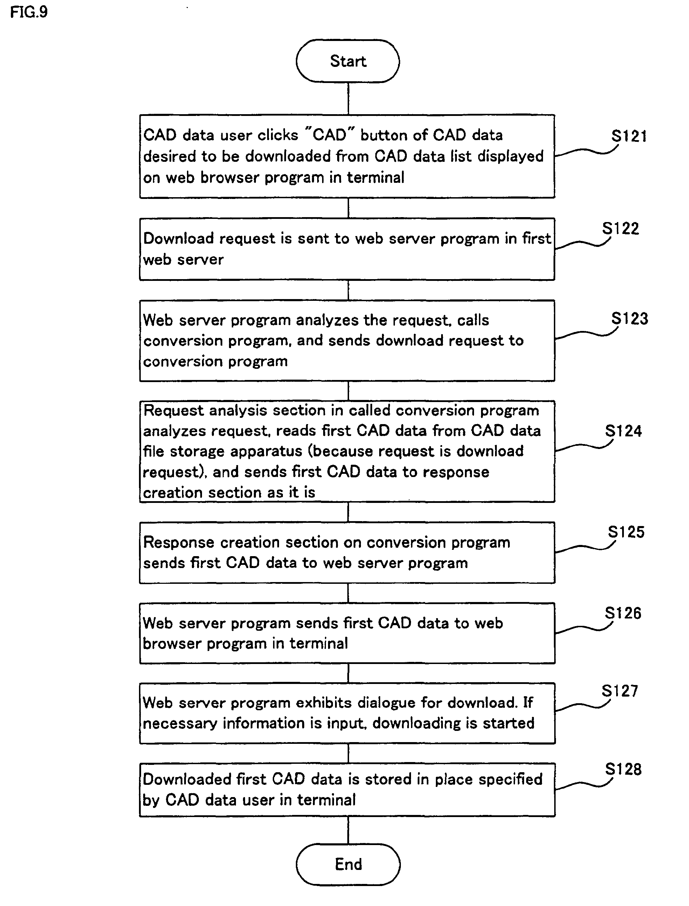

If the user is a CAD data user and the CAD data has the same format as CAD software held by the CAD data user, then the CAD data can be used at it is, without being subjected to the above-described conversion. Therefore, the conversion program 33 also has a function of downloading raw CAD data. FIG. 9 is a flow chart showing the procedure heretofore described. Hereafter, the procedure will be described in detail with reference to FIG. 9.

First, the CAD data user clicks a "CAD" button of CAD data (for example, referred to as "first CAD data") desired to be downloaded from a CAD data list displayed on the web browser program in the terminal 11 (step S121). As a result of this operation, a download request is sent to the web server program in the first web server (step S122).

Subsequently, the web server program analyzes the above-described request. If the web server program recognizes that the request is a request for the conversion program, then the web server program calls the conversion program, and sends a download request to the conversion program (step S123).

In the conversion program called according to the request, first, the request analysis section analyzes the request. If the request analysis section recognizes that the request is a download request as a result of the analysis, then the request analysis section reads the first CAD data from the file storage apparatus, and sends the first CAD data to the response creation section as it is (step S124). The response creation section sends the first CAD data to the web server program (step S125). The web server program sends the first CAD data to the web browser program in the terminal 11 (step S126). The web server program exhibits a dialogue for download to the user of the terminal. If the user inputs necessary information, downloading is started (step 127). The downloaded first CAD data is stored in a place specified by the CAD data user in the CAD data user terminal 11 (step S128).

An outline of a file perusal mechanism using a file perusal system according to the present invention in the configuration heretofore described will now be described with reference to FIG. 4.

It is now supposed that each of the ordinary user terminals 10a to 10c shown in FIG. 4 has the web browser program and the PDF file perusal program installed therein.

If an ordinary user "a" attempts to peruse third CAD data (format B) on the first web server, conventionally CAD software of the format B becomes necessary. In the file perusal system according to the present invention, however, the third CAD data of the format B can be converted to the PDF format at that time, downloaded, and then watched by using the PDF file perusal program in the terminal 10a.

In the same way, the ordinary user "b" can peruse fourth CAD data of the format A. In addition, the ordinary user "c" can convert sixth CAD data, which is actually present on the second web server, to a PDF file on the first web server linked to the second web server, and then peruse the resultant PDF file. When viewed from the ordinary user "c," the sixth CAD data looks as if it is present in the first web server. However, only link information to the sixth CAD data is actually present in the first web server. In this way, it is possible to dispose only the conversion program 33 instead of the actual CAD data in the first web server, pull out the CAD data from other linked second web servers (there are a large number of linked second web servers), convert the CAD data to the PDF file, and peruse the resultant PDF file. Even if the data file storage apparatus 32 in the first web server has a relatively small capacity, therefore, it is also possible to peruse CAD data in all the world so long as there is only link information. Details of the link operation will be described later.

It is now supposed that each of the CAD user terminals 11a to 11c has the web browser program and CAD software for the format A installed therein.

If a CAD data user "b" attempts to peruse /edit second CAD data (format B) stored in the first web server, conventionally CAD software of the format B is necessary. In the file perusal system according to the present invention, however, the second CAD data of the format B can be converted to the CAD data of the format A at that time, downloaded, and then perused /edited by using the CAD software for the format A in the terminal 11b.

Furthermore, the CAD data user "a" can peruse or edit the first CAD data of the format A as it is, in the same way as the conventional technique. In addition, a CAD data user "c" can peruse /edit fifth CAD data of the format A that is actually present in the second web server via the first web server linked to the second web server.

Although not illustrated in FIG. 4, CAD data stored in the first and second web servers is input to /output from a file sharing space (such as the above-described data file storage apparatus) by a CAD data provider from the CAD data provider terminal 12 via the network 20. The web browser program and CAD data to be provided are already stored in the CAD data provider terminal 12. From the browser in the CAD data provider terminal 12, the CAD data provider conducts transfer or deletion of CAD data on the web server by using the HTTP or FTP.

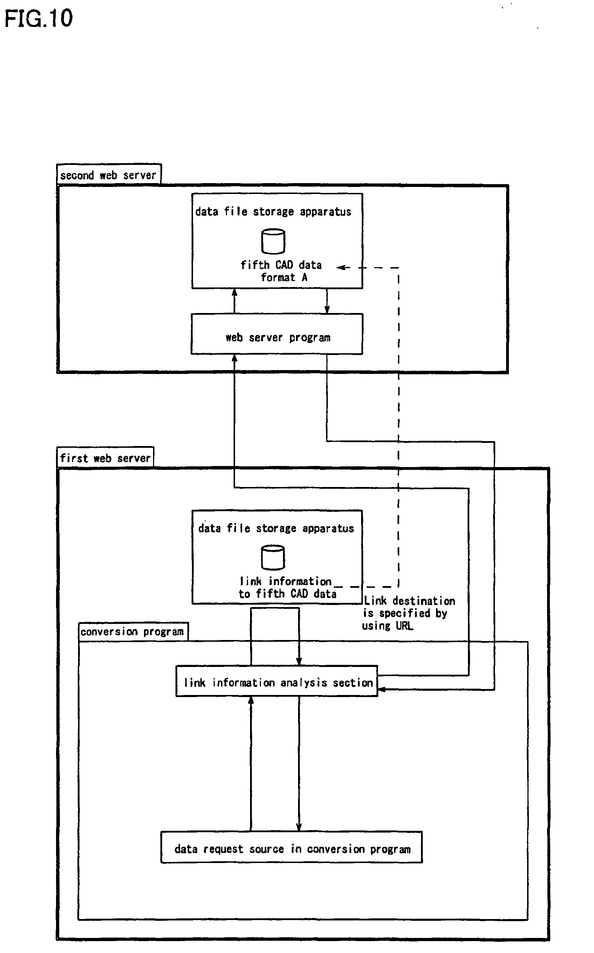

FIG. 10 is a diagram showing an operation logic at the time of the link. In FIG. 10, "data request source in conversion program" is a general name for CAD data requesting sections, i.e., the PDF file creation section, the converter section and the request analysis section. "Link information analysis section" is a section that is necessarily called when reading out CAD data 5 and that checks whether the CAD data 5 is the CAD data main body or link information.

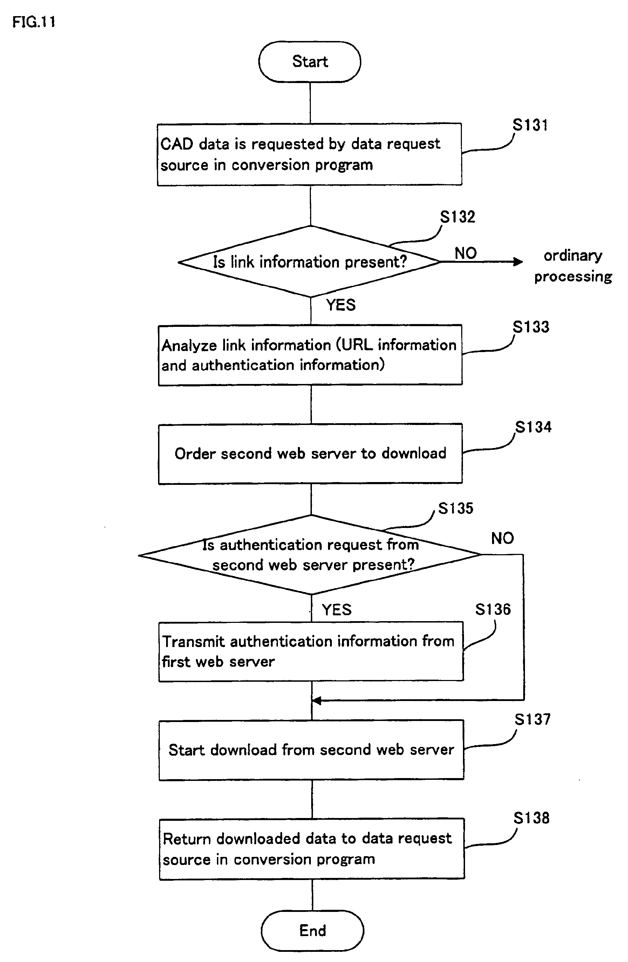

Hereafter, the link operation will be described with reference to a flow chart shown in FIG. 11.

First, CAD data (for example, fifth CAD data) is requested by the data request source in the conversion program (step S131). A link information analysis section reads out the fifth CAD data from the data file storage apparatus and checks whether the CAD data 5 is the CAD data main body or link information (step S132). In this example, the CAD data 5 main body is not present in the first web server, and only the link information is actually present (yes at the step S132). Therefore, the link information analysis section analyzes the link information (link destination URL information, authentication information (ID, password)) (step S133).

By analyzing the URL information, the link information analysis section finds that the link destination is the fifth CAD data on the second web server. The link information analysis section issues a fifth CAD data download request to the second web server (step S134). If at this time authentication is requested by the second web server (yes at step S135), then the link information analysis unit sends authentication information (step S136). The link information analysis section downloads the fifth CAD data from the second web server (step S137). The link information analysis section returns the downloaded fifth CAD data to the data request source in the conversion program (step S138). Thereafter, processing similar to that in the case where linking is not performed is conducted.

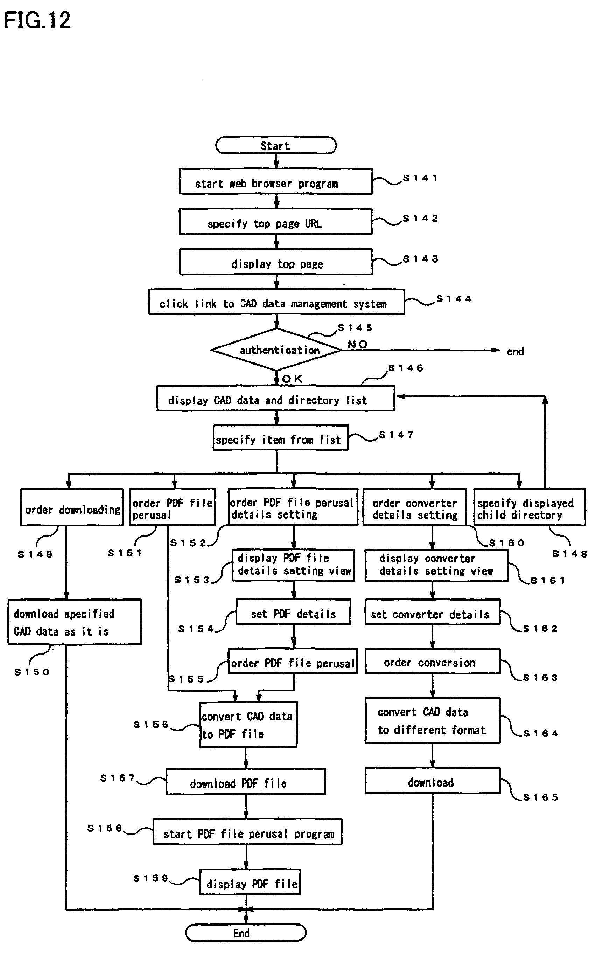

Operation conducted when CAD data is actually perused from the user terminal in the configuration heretofore described will now be described with reference to a flow chart shown in FIG. 12.

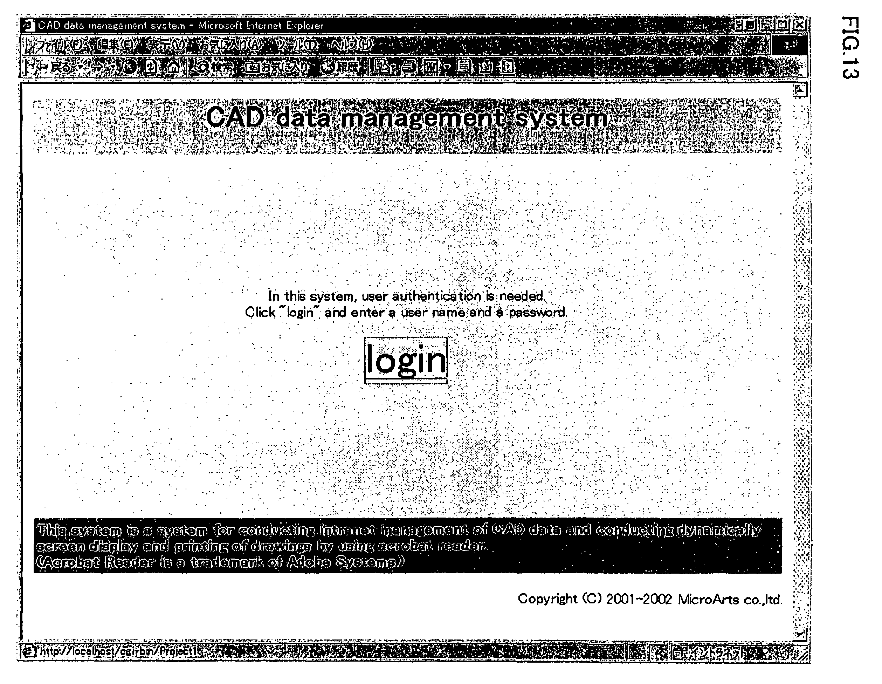

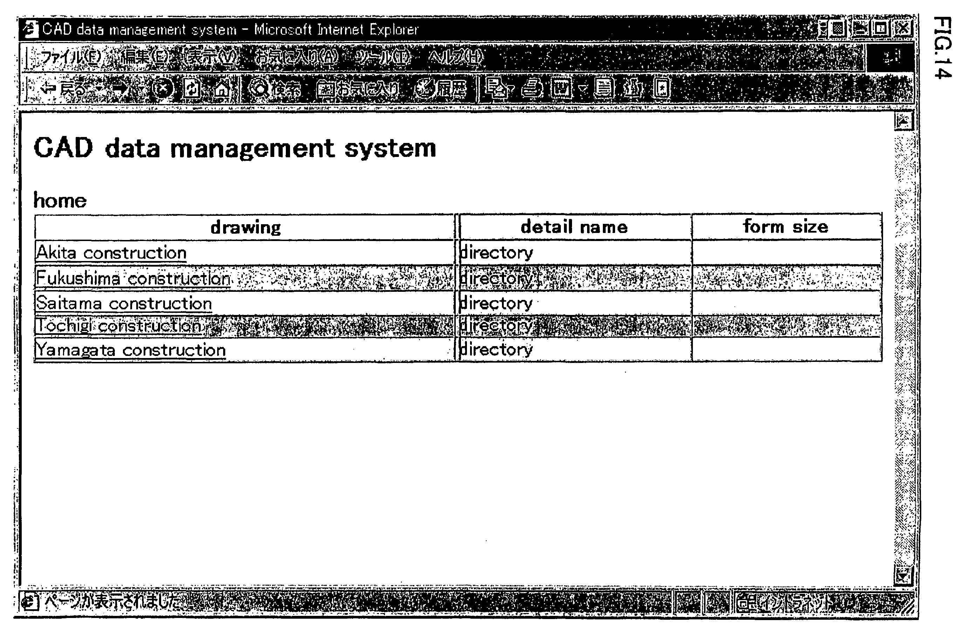

First, the user (which includes both the CAD data user and the ordinary user) starts the web browser program in the user's own terminal 10 or 11 (step S141). The user specifies a URL of a top page of a file perusal system according to the present invention (which has a name "CAD data management system" in embodiments) (step S142). The top page (FIG. 13) is displayed (step S143). If a link to the CAD data management system is clicked (if "login" shown in FIG. 13 is clicked) (step S144), an authentication dialogue, which is not illustrated, is displayed. If a user name and a password are input, then a display view of CAD data and a directory list is displayed (step S146). FIGS. 14 to 16 show embodiments of the view. First, a view shown in FIG. 14 is displayed. If "Akita Construction" is selected and clicked (step S147), then a view shown in FIG. 15 is displayed. In FIG. 15, "TOKKI02.JWC" to "Structure Specifications 2.dxf" in the drawing name are CAD data, and "Construction Number H14-0008 Condominium Field" and so on are child directories. If a displayed child directory is specified (for example, if "Construction Number H13-8891 Elementary School Field" is clicked) (step S148), then a view shown in FIG. 16 is displayed (step S146).

By the way, the CAD data and directory list display view is created by the CAD data file list page creation section, and its flow chart is shown in FIG. 5. In the creation, the CAD data file list page creation section accesses the data file storage apparatus each time, acquires a data file list, picks up only CAD data to be perused or converted and link information, and displays them. As for contents of the data file storage apparatus, a file may be added or deleted at any moment, and consequently a list is always created on the basis of the latest information.

If the user desires to download, for example, CAD data of "YUKA01.JWC" displayed on the sixth line from the top in the view shown in FIG. 16 as it is (without converting it), then the user presses a "CAD" button to order downloading (step S149). The specified CAD data is downloaded as it is (step S150). Details of this procedure are shown in FIG. 9.

If the user desires to convert the CAD data of "YUKA01.JWC" to the PDF format and download and peruse resultant data, then there are two methods.

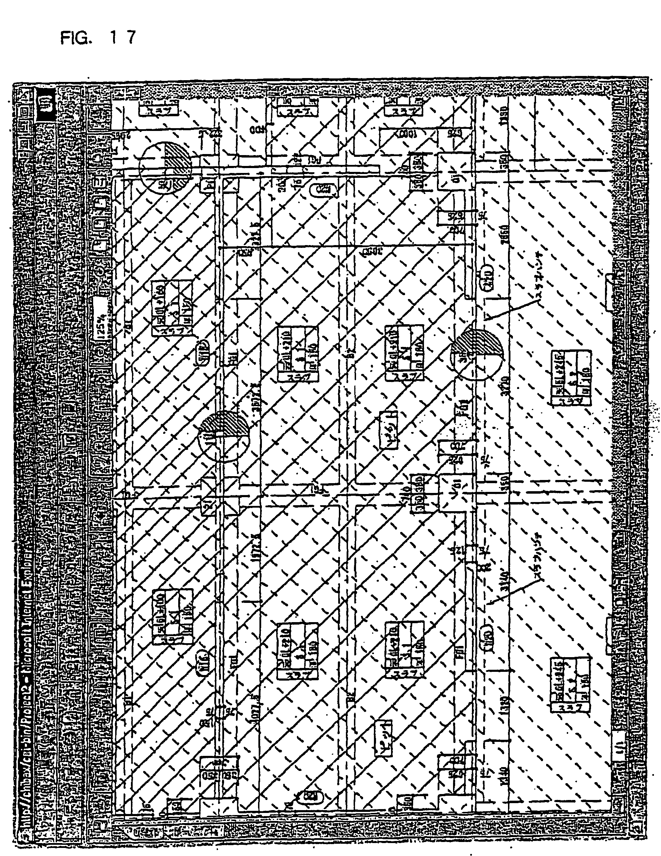

If the user desires to convert the CAD data without changing the form such as colors of lines drawn in a drawing, then the user clicks a "PDF" button (step S151). Thereupon, the conversion program automatically converts the CAD data to a PDF file (step S156). The PDF file is downloaded to the user terminal (step S157). The PDF file perusal program in the user terminal is started (step S158). The PDF file is displayed on the terminal screen (step S159). As the form in this case, the above-described conversion form standard information is used. FIG. 17 is a diagram showing a CAD drawing of a JW_CAD format converted to the PDF format and displayed in the user terminal.

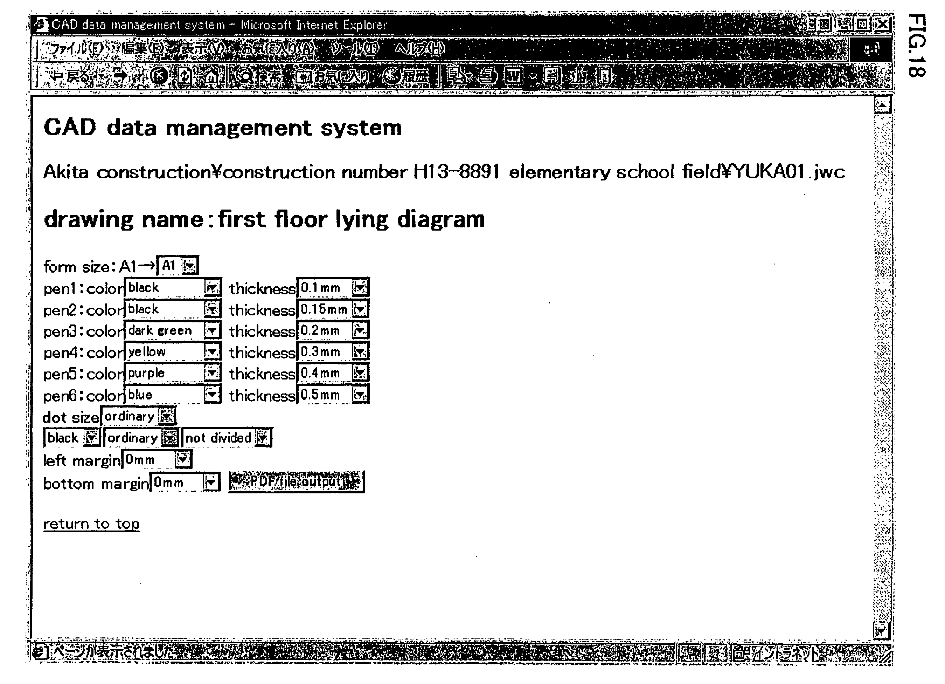

On the other hand, if it is desired to change the form according to the user's taste, then the user clicks "Details" to order PDF file perusal details setting (step S152). If "Details" is clicked, then a PDF file details setting view as shown in FIG. 18 is displayed (step S153). Therefore, the user conducts necessary setting (step S154). The user clicks "PDF File Output" button displayed at bottom left of the view to order the PDF file perusal (step S155). The conversion program automatically converts CAD data to a PDF file in the set form (step S156). Thereafter, processing similar to the above-described processing is conducted. Details of the PDF file perusal flow are shown in FIG. 7 as described earlier.

If the user desires to convert CAD data of "YUKA01. JWC" in the JW_CAD format to, for example, CAD data in the DXF format and download the CAD data in the DXF format, then the user clicks "Conversion" (step S160) and a converter details setting view (although not especially illustrated, contents are similar to those shown in FIG. 18) is displayed (step S161). If the user conducts necessary setting (step S162), and clicks a "download" button to order conversion (step S163), then the CAD data in the JW_CAD format is converted to CAD data in the DXF format (step S164), and the CAD data in the DXF format is downloaded to the user terminal (step S165). Details of the CAD data conversion flow are shown in FIG. 8 as described earlier.

By the way, if CAD data stored in the data file storage apparatus in the first web server is only link information at the step S150, S156 or S164, then data is downloaded from a data file storage apparatus in another linked web server (the second web server in the present embodiment) according to the flow shown in FIG. 11 and described earlier and processing such as conversion is conducted.

In summary, the conversion program directly analyzes CAD data and converts the CAD data to the PDF format. Therefore, not only a PDF file of high quality and high precision can be obtained, but also the form can also be changed according to a peruser's request. Since the created PDF file has a high quality and a high precision, the PDF file can be sufficiently stored and printed as a substitute for the CAD data.

For example, even if a display drawing is expanded on the Acrobat Reader, the display quality is not degraded. If the PDF file is printed under the setting of 100%, printing can be conducted while maintaining the precision of the original CAD data intact. Even if expansion or contraction printing is conducted, a quality equivalent to that obtained by printing from the CAD software can be obtained.

In the present invention, CAD data are stored as vector values. The conversion program in the present invention directly reads out vector values of the CAD data. In the PDF, which is based on the PostScript, vector values can be stored in the same way as the CAD. Therefore, vector values read out from the CAD data are converted to the PDF as they are, resulting in high quality and high precision.

In some cases, however, the CAD data greatly differs from the PDF file in figure data representation method. The conversion program conducts suitable conversion for each CAD data. As a result, it becomes possible to obtain a display result closer to paper.

If Acrobat (registered trademark) of Adobe Systems, which is the most general software for creating a PDF file, is used, then a PDF file is generated by using a printed output of CAD software. Therefore, a printed output image is far from original vector information of the CAD data. Accordingly, the created PDF becomes quite unlike the original CAD data. Furthermore, PDF data created by using vectors is small in capacity. In addition, in PDF, the standard corresponds to compression. Therefore, the PDF data created by the present conversion program becomes smaller in capacity than the original CAD data. Even in the JW_CAD form, a compression effect of approximately one several-th can be anticipated. In the DXF form, a greater compression effect can be anticipated. Although fast Internet lines have spread, the Internet in the mobile environment is still low in rate, the improvement of the transfer rate owing to the compression greatly contributes to the load reduction for the network.

Heretofore, the file perusal system using a network according to the present invention has been described by mainly taking the case of CAD data perusal as an example. However, the present invention is not limited to only perusal of CAD data. It is a matter of course that the present invention can be applied to every document so long as it has a file form that can be converted to the PDF.

In a file perusal system using a network according to the present invention, a program for conversion to the PDF is placed on a web server and the conversion program cooperates with the web server program. When the user has issued a perusal request, therefore, the conversion program on the web server conducts PDF conversion processing in the real time. Therefore, the file perusal system has the following effects.
(1) The peruser uses only the Acrobat Reader and Internet browser, which are PDF perusal programs having a very high spread ratio. Therefore, a CAD program, a CAD viewer, plug in, a JAVA environment and so on are not needed. This is very important to beginners who are inexperienced in IT. It becomes possible for a beginner to peruse CAD data in an intact environment in which the beginner has purchased the computer.
(2) Even if the OS in the peruser's computer is not Windows but a different OS such as Macintosh or Linux, perusal is possible so long as only the Acrobat Reader is activated.
(3) When a peruser has requested perusal, conversion to the PDF is conducted. Therefore, a PDF file can be obtained according to a form (such as setting of line color, line kind, line thickness, dot size, drawing expansion or compression, drawing division and coupling, and margin) desired by the peruser.
(4) CAD data is directly analyzed and converted to PDF. Unlike the conventional PDF conversion program, therefore, there is no quality degradation. Even if expansion or compression is conducted, display with a high quality is conducted. The printing quality is equivalent to that in the case where the CAD program is used.
(5) Even when CAD data differing in format and kind are mixedly present, the peruser needs to operate only the Acrobat Reader. Therefore, a difference in CAD data format can be absorbed.
(6) The peruser can select whether to peruse CAD data as a PDF file, download the CAD data as CAD data, or download the CAD data as CAD data in a different format.
(7) The CAD provider need not previously convert CAD data to the PDF. Therefore, the PDF file conversion program and conversion work become unnecessary and the management also becomes easy. A remarkable burden increase of the data provider is not caused by use of this technique.
(8) The peruser needs only learn the operation method of the browser and Acrobat Reader. Therefore, it is not necessary to learn a method for operating the CAD program and so on.
(9) If a drawing is divided at the time of PDF creation, then the drawing can be printed easily even in an environment lacking a large-sized plotter.
(10) After being perused as a PDF file, the PDF file can be stored and printed, and circulated on the Internet as it is.
(11) Functions (password setting and thumb nail) the PDF has can be used.
(12) Since the PDF file is compressed, the PDF file becomes smaller in file capacity than CAD data and the network load becomes light.
(13) If there is already a file sharing space for CAD on a network, then the file sharing space immediately becomes usable by only introducing the present conversion program and the web server program. Since the file conversion work at the time of introduction is not necessary, past resources can be used as they are.

### INDUSTRIAL APPLICABILITY

As heretofore described, the present invention is a technique that has solved all problems in the conventional data perusal and use. Its utility value is extremely high and application to the following fields is anticipated.
(1) Use in intra-enterprise server
   By installing the program on an intranet file server in an enterprise relating to construction, even construction engineers, traders and clerical employees other than CAD engineers can peruse CAD data.
(2) Use in construction project
   By applying the present invention to a clearing house server (web server that unitarily manages procurement information in public undertaking), a construction field project server, or a mobile terminal (such as a pocket personal computer), CAD data use in the forefront of the field becomes possible.
(3) Use of CAD data provided on a home page by a manufacturer
   It is not necessary to prepare CAD data in a plurality of formats. It becomes possible to preview the CAD data before downloading it.
(4) Opening of information of government and public offices and self-governing bodies to the public
   Many and unspecific persons can peruse drawings of ordered constructions and drawing of public buildings. In addition, electrically delivered CAD data can be opened to the public as it is.
(5) Use in organs of education concerning construction
   The present invention can be used in lessons requiring drawings.
(6) Use on ASP (Application Service Provider)
   By cooperating with a drawing storage server on the ASP, preview on the browser becomes possible.
(7) Use on provider server
   By installing the program on the server of the Internet service provider, the provider user can use widely.
(8) Use in server in the case where an order for drawings is placed outside or drawing creation is conducted by an independent separate department
   Even in the case where an order for CAD data creation is placed outside or CAD data creation is conducted by an independent separate department, it is not necessary to consider a difference in CAD data format and the user need not learn the method for using the CAD software. Therefore, the CAD department can be made independent.

## Claims

1. A document file perusal system using network, the document file perusal system comprising a web server and a plurality of file peruser terminals which can conduct mutual communication via a network, wherein
the web server comprises a web server program, a conversion program and a data file storage apparatus;
a plurality of document files differing in format are stored in the data file storage apparatus;
each of the file peruser terminals comprises a web browser program and a dedicated file perusal program;
if from a file peruser terminal a file peruser orders the web server program in the web server to select some document file stored in the data file storage apparatus and convert the document file to a format corresponding to the dedicated file perusal program,
then the web server program orders the conversion program to conduct conversion, and the conversion program converts the selected document file in the data file storage apparatus to the format corresponding to the dedicated file perusal program; and
the converted document file is sent from the web server program to the web browser program, and the web browser program starts the dedicated file perusal program in order to make it possible for the file peruser to peruse the converted document file.

2. The document file perusal system using network according to claim 1, wherein
each of document files stored in the data file storage apparatus comprises a document file data main body, or information of a link to a second web server which is different from the web server and in which document file data is actually present; and
if the document file selected by the file peruser is the link information, then the document file data is downloaded from the second web server, and the conversion program in the web server converts the downloaded document file data to the format corresponding to the dedicated file perusal program.

3. The document file perusal system using network according to claim 1 or 2, wherein the conversion program is formed so that the file peruser may set a form of the conversion when selecting some document file stored in the data file storage apparatus and ordering conversion to the format corresponding to the dedicated file perusal program.

4. The document file perusal system using network according to claim 1 or 2, wherein the format corresponding to the dedicated file perusal program is the PDF (Portable Document Format).

5. The document file perusal system using network according to claim 3, wherein the format corresponding to the dedicated file perusal program is the PDF.

6. The document file perusal system using network according to claim 1 or 2, wherein the document file is CAD drawing data.

7. The document file perusal system using network according to claim 3, wherein the document file is CAD drawing data.

8. The document file perusal system using network according to claim 4, wherein the document file is CAD drawing data.

9. The document file perusal system using network according to claim 5, wherein the document file is CAD drawing data.

10. The document file perusal system using network according to claim 1 or 2, wherein the network is the Internet and/or an intranet.

11. The document file perusal system using network according to claim 3, wherein the network is the Internet and/or an intranet.

12. The document file perusal system using network according to claim 4, wherein the network is the Internet and/or an intranet.

13. The document file perusal system using network according to claim 5, wherein the network is the Internet and/or an intranet.

14. The document file perusal system using network according to claim 6, wherein the network is the Internet and/or an intranet.

15. The document file perusal system using network according to claim 7, wherein the network is the Internet and/or an intranet.

16. The document file perusal system using network according to claim 8, wherein the network is the Internet and/or an intranet.

17. The document file perusal system using network according to claim 9, wherein the network is the Internet and/or an intranet.

18. The conversion program according to claim 16, for making the web server function as means for converting the selected document file in the data file storage apparatus to the format corresponding to the dedicated perusal program.

19. The conversion program according to claim 17, for making the web server function as means for converting the selected document file in the data file storage apparatus to the format corresponding to the dedicated perusal program.

20. A web server connected to the network, wherein the web server has the conversion program according to claim 18 installed therein.

21. A web server connected to the network, wherein the web server has the conversion program according to claim 19 installed therein.

22. A computer readable medium having a program for controlling a computer recorded thereon, wherein the medium stores at least the conversion program according to claim 18.

23. A computer readable medium having a program for controlling a computer recorded thereon, wherein the medium stores at least the conversion program according to claim 19.
